# EUROPEAN PATENT APPLICATION

(11) **EP 4 407 001 A1**
(43) Date of publication of application: **31.07.2024**
(21) Application number: 24153332.2
(22) Date of filing: 23.01.2024
(51) Int. Cl.: C08L 1/02, C08L 1/10, C08L 1/14, C08L 67/02

(54) **MOLDING MATERIAL**

(30) Priority: 24.01.2023 JP 2023009013
(71) Applicant: Seiko Epson Corporation, Tokyo 160-8801 (JP)
(72) Inventor: FUJITA, Tomohiro, Suwa-shi, 392-8502 (JP); HIRAIWA, Takashi, Suwa-shi, 392-8502 (JP); YOKOKAWA, Shinobu, Suwa-shi, 392-8502 (JP); HOKARI, Hirofumi, Suwa-shi, 392-8502 (JP)
(74) Representative: Lewis Silkin LLP

(57) **Abstract**

A molding material contains cellulose fibers, aliphatic polyester, and esterified cellulose, and the amount of the cellulose fibers is 50% to 80% by mass. The amount of the esterified cellulose in the molding material may be 4% to 25% by mass. The amount of the aliphatic polyester, XP mass%, and the amount of the esterified polyester, XE mass%, may satisfy 1.0 ≤ XP/XE ≤4.0.

## Description

The present application is based on, and claims priority from JP Application Serial Number 2023-009013, filed January 24, 2023, the disclosure of which is hereby incorporated by reference herein in its entirety.

### BACKGROUND

### 1. Technical Field

The present disclosure relates to a molding material.

### 2. Related Art

Molding materials containing cellulose fibers and resin have been known. For example, JP-A-2000-6142 discloses a composite material containing fibers derived from paper and biodegradable resin.

However, this composite material does not easily form molded products with enhanced strength. More specifically, the molded products formed of the composite material do not easily have both high impact strength and high bending strength and are, accordingly, likely to be deformed or cracked. Also, when the amount of fibers, such as cellulose fibers, is increased, the impact strength of the molded products tends to decrease.

Additionally, the molded products of the composite material disclosed in JP-A-2000-6142 do not have sufficient heat resistance.

### SUMMARY

Such issues are solved by the concept of the present disclosure, which is implemented as the following embodiments.

The molding material according to an aspect of the present disclosure contains cellulose fibers, aliphatic polyester, and esterified cellulose, and the cellulose fibers are contained in an amount of 50% to 80% by mass.

### DESCRIPTION OF EMBODIMENTS

Some embodiments of the present discloser will now be described in detail.

### 1 Molding Material

The molding material of the present disclosure will first be described. The molding material contains cellulose fibers, aliphatic polyester, and esterified cellulose. The cellulose fiber content of the molding material is 50% to 80% by mass.

Such a composition contains cellulose fibers in a predetermined range of proportion, that is, in a proportion as high as 50% to 80% by mass, and can provide a molding material that can form molded products with high impact strength and bending strength.

The reason for these excellent effects is probably as follows. That is, the molding material contains cellulose, which has high theoretical strength and can retain the shape of the molded product of the molding material, and aliphatic polyester, which functions as a binder, and further contains esterified cellulose, which has compatibility and affinity with cellulose fibers and aliphatic polyester. This composition reduces or prevents the offset of the functions of these constituents to enable the constituents to function fully as intended. More specifically, in the process for manufacturing molded products using the molding material or in the molded product of the molding material, the cellulose fibers and the aliphatic polyester can fully function as intended, and the aliphatic polyester can exhibit increased wettability to the cellulose fibers. Also, the internal separation between the different constituents of the molded product can be prevented or reduced. Thus, it is expected that the above-described excellent effects will be produced.

In the above embodiment, the molding material can increase the heat resistance of the resulting molded product. Also, since the molding material favorably prevents or reduces the internal separation between the different constituents of the molded product, the molded product is prevented effectively from causing dust or other foreign matter.

Additionally, cellulose fibers are an abundant natural material derived from plants. The molding material containing such cellulose fibers in high proportion responds appropriately to environmental issues and the conservation of underground resources. Also, cellulose fibers are advantageous for stable supply and cost reduction of the molding material and its molded products. Furthermore, cellulose fibers are contained in, for example, wastepaper and used cloth in large amounts, as well as virgin pulp, and are advantageous from the viewpoint of promoting the effective reuse of resources.

Esterified cellulose can be favorably obtained from such cellulose fibers and is generally a highly biodegradable material. Many of the aliphatic polyesters have high biodegradability, as will be described in detail later. Therefore, the molding material and its molded products, as a whole, can respond appropriately to environmental issues and the like.

In contrast, molding materials not having the above-described composition fail to produce satisfactory results. For example, in a composition containing cellulose fibers and aliphatic polyester but not esterified cellulose, the wettability of the aliphatic polyester to the cellulose fibers is insufficient. Consequently, the molded products of such a molding material are likely to cause internal separation between different constituents, having poor strength.

Also, in a composition containing cellulose fibers and esterified cellulose but not aliphatic polyester, which functions as a binder, the molding material is significantly poor in formability and difficult to form into shapes.

When the molding material contains another binder component instead of aliphatic polyester, the wettability of the binder to the cellulose fibers is still insufficient. Consequently, the molded products of the molding material are likely to cause internal separation between different constituents, having poor strength.

Furthermore, even when the molding material contains cellulose fibers, aliphatic polyester, and esterified cellulose, the cellulose fibers do not function as intended in the case where the cellulose content of the molding material is lower than the above lower limit.

Also, even when the molding material contains cellulose fibers, aliphatic polyester, and esterified cellulose, the formability of the material and the strength of the molded product decrease rapidly in the case where the cellulose content of the molding material is higher than the above upper limit because the aliphatic polyester and esterified cellulose contents decrease relatively.

### 1-1 Cellulose Fibers

The molding material of the present disclosure contains cellulose fibers. The cellulose fibers, which are a major constituent of the molding material of the present disclosure, greatly contribute to maintaining the shape of the molded products of the molding material and significantly influence the properties of the molded products.

Cellulose is an abundant natural material derived from plants. Using cellulose fibers responds appropriately to environmental issues and the conservation of underground resources and is, in addition, advantageous for stable supply and cost reduction of the molding material and its molded products. Additionally, cellulose fibers have particularly high theoretical strength among fibers and are advantageous for increasing the strength of the molded product.

Virgin pulp may be used as the cellulose fibers, or wastepaper, used cloth, or the like that are recycled may be used.

In general, cellulose fibers substantially consist of cellulose but, in the present disclosure, may contain other constituents. Examples of such other constituents include hemicellulose and lignin.

The cellulose fibers may be bleached or otherwise treated. Examples of the material of cellulose fibers include cotton, hemp, rayon, and cuprammonium rayon.

The cellulose fiber content of the molding material is 50% to 80% by mass as stated above but, in some embodiments, may be 50% to 75% by mass, for example, 50% to 70% by mass or 50% to 60% by mass.

Such a cellulose fiber content is significantly effective in producing the above-described effects. Additionally, the formability of the molding material can be improved, advantageously increasing the productivity of the molded product.

The average length of the cellulose fibers may be, but is not limited to, 1 µm to 5000 µm and, in some embodiments, may be 1 µm to 400 µm.

Such cellulose fibers can improve the stability, strength, and other properties of the molded products of the molding material. Additionally, the molded products of the molding material prevent or reduce the occurrence of dust or other foreign effectively. Also, the molded products of the molding material can be prevented effectively from having undesired unevenness at the surface. The length of the cellulose fibers is determined according to ISO 16065-2: 2007.

The average thickness of the cellulose fibers may be, but is not limited to, 1 µm to 100 µm and, in some embodiments, may be 1 µm to 20 µm.

Such cellulose fibers can improve the stability, strength, and other properties of the molded products of the molding material. Also, the molded products of the molding material can be prevented effectively from having undesired unevenness at the surface.

The average aspect ratio of the cellulose fibers, that is, the proportion of the average length to the average thickness, may be, but is not limited to, in the range of 10 to 1000 and, in some embodiments, may be in the range of 15 to 100.

Such cellulose fibers can improve the stability, strength, and other properties of the molded products of the molding material. Additionally, the molded products of the molding material prevent or reduce the occurrence of dust or other foreign effectively. Also, the molded products of the molding material can be prevented effectively from having undesired unevenness at the surface.

### 1-2 Aliphatic Polyester

The molding material of the present disclosure contains aliphatic polyester. The aliphatic polyester is a constituent functioning as a binder in the manufacture of molded products.

The aliphatic polyester can increase the toughness of the molded products of the molding material and improve the impact resistance of the molded products.

Aliphatic polyester does not have any aromatic chemical structure, and in which the polyvalent carboxylic and polyhydric alcohol moieties each contain an aliphatic alkylene group.

In some embodiments, the aliphatic polyester has a chemical structure formed by condensation of an alkylenedicarboxylic acid with an alkylene group whose carbon chain length is 2 to 6 and an alkylenediol with an alkylene group whose carbon chain length is 2 to 8.

Such an aliphatic polyester can function as an effective binder and be favorably compatible with the esterified cellulose, thus producing the above-described effects more significantly.

While the alkylene groups of the alkylenedicarboxylic acid can have a carbon chain length of 2 to 6, the carbon chain length, in some embodiments, may be 2 to 5 or 2 to 4. Such an aliphatic polyester can produce the above-described effects more significantly.

The alkylene group of the alkylenedicarboxylic acid may be brunched but is, in some embodiments, linear.
Such an aliphatic polyester can produce the above-described effects more significantly.

The alkylenedicarboxylic acid may be one or a combination of two or more selected from the group including succinic acid, glutaric acid, adipic acid, pimelic acid, suberic acid, azelaic acid, and sebacic acid.

While the alkylene groups of the alkylenediol can have a carbon chain length of 2 to 8, the carbon chain length, in some embodiments, may be 2 to 6 or 3 to 5. Such an aliphatic polyester can produce the above-described effects more significantly.

The alkylene group of the alkylenediol may be brunched but is, in some embodiments, linear. Such an aliphatic polyester can produce the above-described effects more significantly.

The alkylenediol may be one or a combination of two or more selected from the group including, for example, 1,2-ethanediol, 1,3-propanediol, 1,4-butanediol, 1,5-pentanediol, 1,6-hexanediol, 1,7-heptanediol, and 1,8-octanediol.

The aliphatic polyester may be unbiodegradable but is, in some embodiments, biodegradable.

Such an aliphatic polyester enables the biodegradation of the molded products of the molding material that are, for example, disposed of in a landfill or discharged into the sea or rivers, thus preventing or reducing effectively the long-period retention of the constituents of the molding material in nature.

Specific examples of the aliphatic polyester include poly(butylene succinate), poly(butylene succinate adipate), polyethylene adipate), polypropylene glutarate), poly(pentene suberate), and poly(hexene azelate), and the aliphatic polyester can be one or a combination of two or more selected from these. In some embodiments, the aliphatic polyester may be poly(butylene succinate), poly(butylene succinate adipate), or polyethylene adipate).

These are biodegradable materials, and their use can more suitably reduce the environmental impact of the molded products. Additionally, these materials are relatively inexpensive and readily available stably. Thus, such aliphatic polyesters are advantageous from the viewpoint of stable supply and cost reduction of the molding material and its molded product.

In the present disclosure, the aliphatic polyester content of the molding material may be, but is not limited to, 12% to 40% by mass and, in some embodiments, may be 15% to 40% by mass or 20% to 40% by mass. Such an aliphatic polyester content is significantly effective in producing the above-described effects.

In the molding material of the present disclosure, the proportion of the aliphatic polyester content XP (mass%) to the cellulose fiber content XC (mass%) may satisfy 0.24 ≤ XP/XC ≤ 0.80, for example, 0.30 ≤ XP/XC ≤ 0.80 or 0.40 ≤ XP/XC ≤ 0.80. Such a molding material is significantly effective in producing the above-described effects.

### 1-3 Esterified Cellulose

The molding material of the present disclosure contains esterified cellulose. Esterified cellulose has an affinity for the cellulose fibers and the aliphatic polyester.

In the present disclosure, the esterified cellulose functions as a compatibilizer to increase the compatibility between the cellulose fibers and the aliphatic polyester when molded products are manufactured using the molding material. Thus, the wettability of the aliphatic polyester to the cellulose fibers is increased to enhance the bending strength of the molded products of the molding material of the present disclosure. Also, the esterified cellulose can increase the heat resistance of the molded products of the forming material of the present disclosure.

Esterified cellulose is a compound having a chemical structure in which at least some of the hydroxy groups of the cellulose molecule are esterified.

In the ester structure of esterified cellulose, an acyl group is bound to the oxygen atom of the hydroxy group of cellulose.

The molding material of the present disclosure contains at least an esterified cellulose and may contain a plurality of esterified celluloses.

The esterified cellulose in the molding material of the present disclosure may contain a kind of acyl group or varying acyl groups in the molecule.

The acyl group may contain, for example, an aromatic hydrocarbon moiety but, in some embodiments, contains an aliphatic hydrocarbon moiety.

Consequently, the affinity and compatibility of the esterified cellulose are increased to the cellulose fibers and the aliphatic polyester, enhancing the impact strength and bending strength of the molded products of the molding material.

The acyl group may contain, for example, a linear hydrocarbon moiety but, in some embodiments, contains a branched hydrocarbon moiety.

Consequently, the affinity and compatibility of the esterified cellulose are increased to the cellulose fibers and the aliphatic polyester, producing the above-described effects more significantly.

When the acyl group contains an alkyl group, the alkyl group may have a carbon chain length of 1 to 18 or 2 to 12 and, in some embodiments, 2 to 6.

Consequently, the affinity and compatibility of the esterified cellulose are increased to the cellulose fibers and the aliphatic polyester, enhancing the impact strength and bending strength of the molded products of the molding material.

When the esterified cellulose used in the molding material of the present disclosure contains a plurality of acyl groups in the molecule, the weighted average of the carbon chain lengths of the alkyl groups of the acyl groups is desirably within the above range. The weighted average of the carbon chain lengths of such alkyl groups is hereinafter referred to as the "average carbon chain length of alkyl groups".

Examples of the acyl group include acetyl, propionyl, butyloyl, stearoyl, and benzoyl.

Esterified cellulose is a compound having a chemical structure in which at least some of the hydroxy groups of the cellulose molecule are esterified, as described above. The substitution degree, or DV value, of an esterified cellulose, which is the proportion of the hydroxy groups of the cellulose that are esterified by the acyl group to the total hydroxy groups of the cellulose molecule, may be in the range of 1.0 to 2.5, for example, 1.2 to 2.4. In some embodiments, it is in the range of 1.4 to 2.3.

Thus, the affinity and compatibility of the esterified cellulose are increased to the cellulose fibers and the aliphatic polyester, enhancing the impact strength and bending strength of the molded products of the molding material.

In some embodiments, the esterified cellulose is esterified by one or more acyl groups containing alkyl groups with a carbon chain length of 1 to 18 and has a DS value of 1.0 to 2.5.

Consequently, the affinity and compatibility of the esterified cellulose are increased to the cellulose fibers and the aliphatic polyester, enhancing the impact strength and bending strength of the molded products of the molding material.

The number average molecular weight of the esterified cellulose may be 10,000 to 400,000 and, in some embodiments, may be 20,000 to 300,000 or 35,000 to 200,000.

Consequently, the affinity and compatibility of the esterified cellulose are increased to the cellulose fibers and the aliphatic polyester, enhancing the impact strength and bending strength of the molded products of the molding material.

The glass transition temperature of the esterified cellulose may be 80°C to 200°C and, in some embodiments, may be 90°C to 180°C or 100°C to 170°C.

Consequently, the affinity and compatibility of the esterified cellulose are increased to the cellulose fibers and the aliphatic polyester, enhancing the impact strength, bending strength, and heat resistance of the molded products of the molding material.

In the present disclosure, the esterified cellulose content of the molding material may be 4% to 25% by mass and, in some embodiments, may be 6% to 25% by mass or 8% to 25% by mass.

Such a molding material can enhance the impact strength and bending strength of the resulting molded product.

In the molding material of the present disclosure, the proportion of the aliphatic polyester content XP (mass%) to the esterified cellulose content XE (mass%) may satisfy 1.0 ≤ XP/XE ≤4.0.

Such a molding material can enhance the impact strength and bending strength of the resulting molded product.

In the molding material, also, the proportion of the esterified cellulose content XE (mass%) to the cellulose content XC (mass%) may satisfy 0.05 ≤ XE/XC ≤ 0.70 and, in some embodiments, may satisfy 0.10 ≤ XE/XC ≤ 0.60 or 0.20 ≤ XE/XC ≤ 0.55.

Such a molding material can enhance the impact strength and bending strength of the resulting molded product.

### 1-4 Flame Retardant

The molding material of the present disclosure may further contain a flame retardant. Examples of the flame retardant include inorganic flame retardants, such as antimony compounds, metal hydroxides, nitrogen compounds, and boron compounds, and organic flame retardants, such as bromine- or phosphorus-containing organic compounds.

When the molding material contains a flame retardant, the amount of the flame retardant may be 1 to 20 parts by mass relative to 100 parts of the total mass of the cellulose fibers, the aliphatic polyester, and the esterified cellulose.

Such an amount of flame retardant allows the molding material of the present disclosure to be effective in producing the above-described effects and enables the molded products of the molding material to exhibit flame retardancy.

### 1-5 Other Constituents

The molding material of the present disclosure may further contain other constituents. Such other constituents in this section will also be referred to as "further optional constituents".

Further optional constituents include, for example, coloring agents, insecticides, antifungal agents, antioxidants, ultraviolet absorbents, aggregation inhibitors, release agents, and resins other than the above-described resin.

However, the further optional constituent content of the molding material may be 10% by mass or less and, in some embodiments, may be 5% by mass or less or 3% by mass or less.

### 2 Method for Producing the Molding Material

The method for producing the molding material of the present disclosure will now be described. The molding material can be produced by mixing the above-described constituents. In this method, the timing of mixing the constituents may be the same or different.

The constituents may be, for example, kneaded to produce the molding material. This kneading may be performed with, for example, a single screw kneader, a twin screw kneader, a multi-screw kneader, a mixer, a roll, or a Banbury machine.

The stranded molding material obtained by kneading may be formed into pellets using, for example, a strand or water ring hot cut pelletizer or the like.

Alternatively, the molding material may be produced in the following manner. The mixture of the constituents may be formed into a sheet and then cut into desired shapes with, for example, a shredder, thus obtaining pellets of the molding material. The sheet of the mixture can be formed by any method without particular limitation. For example, the mixture may be deposited in a sheet form in the air, and the deposit sheet is pressed to eliminate air and increase the density with a calendering machine. The pressed sheet is then subjected to non-contact heating in a furnace and heat-pressed with a heat press machine. The shape of the pellets obtained by cutting the sheet may be, but is not limited to, substantially a rectangle solid with a length of 2 mm to 5 mm.

The cellulose fibers used in the molding material of the present disclosure may be defibrated in advance. In an embodiment, wastepaper or any other cellulose fiber source containing cellulose fibers is defibrated for use.

### 3 Molded Product

A molded product manufactured using the molding material of the present disclosure will now be described. The molded product contains cellulose fibers, aliphatic polyester, and esterified cellulose, and the amount of the cellulose fibers in the molded product is 50% to 80% by mass.

The molded product according to the present disclosure can be manufactured using the above-described molding material. Thus, the molded product contains cellulose fibers in a predetermined amount, that is, in a proportion as high as 50% to 80% by mass, and can have high impact strength and bending strength. Also, the heat resistance of the molded product can be increased.

The cellulose fibers are an abundant natural material derived from plants. The molded product containing such cellulose fibers in high proportion responds appropriately to environmental issues and the conservation of underground resources and can be stably supplied at a low cost. Furthermore, cellulose fibers are contained in, for example, wastepaper and used cloth in large amounts, as well as virgin pulp, and are advantageous from the viewpoint of promoting the effective reuse of resources.

Esterified cellulose can be favorably obtained from such cellulose fibers and is generally a highly biodegradable material. Many of the aliphatic polyesters have high biodegradability, as will be described in detail later. Accordingly, the molded product can respond, as a whole, appropriately to environmental issues and the like.

In some embodiments, the constituents of the molded product satisfy the conditions or requirements described in the above sections 1-1 to 1-5.

The molded product may be in any form without particular limitation, such as a sheet, a block, a sphere, or a three-dimensional body.

The molded product may be used in any application, such as printer enclosures or other enclosures, ink cartridges, or various containers.

In particular, the molded product according to the present disclosure is prevented effectively from causing dust because of a high affinity between the cellulose fibers and the binder and, accordingly, can be favorably applied to ink cartridges or the like, in which dust is a particular issue.

The molded product may be manufactured by any method and, in some embodiments, may be manufactured by injection molding or press molding of the molding material of the present disclosure.

While the concept of the present disclosure has been described with reference to exemplary embodiments, it is to be understood that the implementation of the present disclosure is not limited to the disclosed embodiments.

### EXAMPLES

Examples of the implementation of the present disclosure will now be described.

### 4 Preparation of Molding Material

### EXAMPLE 1

Weighed were 50.0 parts by mass of cellulose fibers (Guaiba BEKP, produced by Empresas CMPC S. A.), 40.0 parts by mass of poly(butylene succinate) (BioPBS FZ71PB, produced by Mitsubishi Chemical Corporation) as the aliphatic polyester, and 10.0 parts of cellulose acetate butyrate (CAB-381-20, produced by Eastman Chemical Company) as the esterified cellulose. These materials were kneaded in a twin screw kneader (KZW15TW-45MG, manufactured by Technovel Corporation). For this kneading, the maximum heating temperature was set to 180°C, and the extrusion discharge rate was 1 kg/h. The kneaded mixture was stranded and then formed into pellets as the molding material with a pelletizer. EXAMPLES 2 to 12

Pellets of each molding material were prepared in the same manner as in Example 1, except that the proportions of the constituents, including aliphatic polyester and esterified cellulose, were changed as presented in the Table.

### COMPARATIVE EXAMPLES 1 to 5

Pellets of each molding material were prepared in the same manner as in Example 1, except that the constituents to be kneaded and their proportions were changed as presented in the Table.

### 5 Manufacture of Molded Products

The molding materials prepared in the above-described Examples 1 to 10 and Comparative Examples 1 to 5 were each formed into an examination product for testing the Charpy impact strength and examination products for testing bending strength, bending elastic modulus, and deflection temperature under load (hereinafter also abbreviated to DTUL) by injection molding using an injection molding apparatus THX40-5V (manufactured by Nissei Plastic Industrial Co., Ltd.) In injection molding, the molding materials were heated at 200°C. The examination products for testing the Charpy impact strength were rectangular plates with a length of 80 mm ± 2 mm, a width of 4.0 mm ± 0.2 mm, and a thickness of 10.0 mm ± 0.2 mm. The examination products for testing the bending strength, bending elastic modulus, and DTUL were rectangular plates with a length of 80 mm ± 2 mm, a width of 10.0 mm ± 0.2 mm, and a thickness of 4.0 mm ± 0.2 mm. Although the molding materials of Examples 1 to 10 and Comparative Examples 1 and 2 were molded into the examination products, those of Comparative Examples 3 to 5 could not.

The molding materials of Examples 11 and 12 were each molded into an examination product for testing the Charpy impact strength and examination products for testing bending strength, bending elastic modulus, and DTUL by press molding using a press molding machine, hydraulic press PHKS-40ABS (manufactured by Towa Seiki Co., Ltd.) In press molding, the molding materials were heated at 200°C. The examination products for testing the Charpy impact strength were rectangular plates with a length of 80 mm ± 2 mm, a width of 4.0 mm ± 0.2 mm, and a thickness of 10.0 mm ± 0.2 mm. The examination products for testing the bending strength, bending elastic modulus, and DTUL were rectangular plates with a length of 80 mm ± 2 mm, a width of 10.0 mm ± 0.2 mm, and a thickness of 4.0 mm ± 0.2 mm.

### 6 Evaluation

The molded products of the Examples and Comparative Examples were subjected to the following evaluations.

### 6-1 Charpy Impact Strength

The molded products of the Examples and Comparative Examples for testing the Charpy impact strength, produced in the manner as described in the above section 5 were subjected to measurements of the Charpy impact strength in accordance with ISO 179 (JIS K7111) using an impact tester IT manufactured by Toyo Seiki Seisaku-sho, Ltd. In the measurements of Charpy impact strength, the hammer weight was set at 4 J (WR 2.14 N/m), and the starting angle was set at 150°. The test piece had a width excluding the notch depth of 8.0 mm ± 0.2 mm and a notch angle of 45°.

### 6-2 Bending Strength

The molded products of the Examples and Comparative Examples for testing the bending strength, produced in the manner as described in above section 5 were subjected to measurements of the bending strength in accordance with ISO 178 (JIS K7171) using 68TM-30 manufactured by Instron. In the measurements of bending strength, the span length was set at 64 mm.

### 6-3 Bending Elastic Modulus

The molded products of the Examples and Comparative Examples for testing the bending elastic modulus, produced in the manner as described in the above section 5 were subjected to measurements of the bending elastic modulus in accordance with ISO 178 (JIS K7171) using 68TM-30 manufactured by Instron. In the measurements of bending elastic modulus, the span length was set at 64 mm.

### 6-4 Deflection Temperature Under Load (DTUL)

The molded products of the Examples and Comparative Examples for testing the DTUL, produced in the manner as described in the above section 5 were subjected to measurements of the DTUL in accordance with ISO 75 (JIS K7191) using an HDT tester 3M-2 (flatwise testing method) manufactured by Toyo Seiki Seisaku-sho, Ltd. Bending tests under three-point loading were conducted at a span length of 64 mm and a bending stress of 1.8 MPa in a thermostatic oven. The heating start temperature was 30°C, the heating rate was 120°C/h, and the heating end temperature was 220°C. The temperature at which the displacement reached 0.34 mm was determined as the DTUL. The examination products with a DTUL of 90°C or more were determined to be good, and those with a DTUL of less than 90°C were determined to be bad.

### 6-5 Comprehensive Evaluation

The examination products of the Examples and Comparative Examples were each comprehensively evaluated according to the result of Charpy impact strength in the above section 6-1 and the result of bending elastic modulus in the above section 6-3.
A: Exhibited a Charpy impact strength of 7 kJ/m² or more and a bending elastic modulus of 3.5 GPa or more.
B: Exhibited a Charpy impact strength of 4 kJ/m² to less than 7 kJ/m² and a bending elastic modulus of 3.5 GPa or more.
C: Satisfied either the Charpy impact strength of 4 kJ/m² or more or the bending elastic modulus of 3.5 GPa or more, but not the other.
D: Exhibited a Charpy impact strength of less than 4 kJ/m² and a bending elastic modulus of less than 3.5 GPa.
E: Exhibited a DTUL of less than 90°C.
F: Molded products were not obtained.

These results are summarized in the Table, along with the compositions of the molding materials of the Examples and comparative examples.

In the Table, the cellulose fibers are Guaiba BEKP produced by Empresas CMPC S. A. For aliphatic polyester, poly(butylene succinate) BioPBS FZ71PB, produced by Mitsubishi Chemical Corporation, is abbreviated to PBS, and poly(butylene succinate adipate) BioPBS FD92PB, produced by Mitsubishi Chemical Corporation, is abbreviated to PBSA. For esterified cellulose, cellulose acetate butyrate CAB-381-20 (DS value: 1.5 to 2.0, average carbon chain length of alkyl groups: 2.0 to 2.2, number average molecular weight: 70,000, glass transition temperature: 141°C), produced by Eastman Chemical Company, is abbreviated to CAB, cellulose acetate propionate CAP-482-20 (DS value: 1.0 to 1.5, average carbon chain length of alkyl groups: 1.9 to 2.1, number average molecular weight: 75,000, glass transition temperature: 147°C), produced by Eastman Chemical Company, is abbreviated to CAP, and the mixture of cellulose acetate (alkyl carbon chain length: 1) and cellulose stearate (alkyl carbon chain length: 18 carbon atoms) in mass ratio of 80:20 (DS value: 1.5 to 2.0) is abbreviated to C1/C18.

**Table**

| | | | Example | | | | | | | | | | | | Comparative Example | | | | |
|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 1 | 2 | 3 | 4 | 5 |
| Composition [mass%] | Aliphatic polyester | PBS | 40.0 | 30.0 | 25.0 | - | - | - | - | - | - | - | - | - | 50.0 | - | - | - | - |
| | | PBSA | - | - | - | 30.0 | 40.0 | 25.0 | 25.0 | 40.0 | 30.0 | 30.0 | 16.0 | 12.0 | - | 50.0 | - | - | - |
| | Esterified cellulose | CAB | 10.0 | 20.0 | - | - | - | - | 25.0 | 10.0 | 20.0 | 10.0 | 4.0 | 8.0 | - | - | 50.0 | - | - |
| | | CAP | - | - | 25.0 | 20.0 | 10.0 | - | - | - | - | - | - | - | - | - | - | 50.0 | - |
| | | C1/C18 | - | - | - | - | - | 25.0 | - | - | - | - | - | - | - | - | - | - | 50.0 |
| | Cellulose fibers | | 50.0 | 50.0 | 50.0 | 50.0 | 50.0 | 50.0 | 50.0 | 50.0 | 50.0 | 60.0 | 80.0 | 80.0 | 50.0 | 50.0 | 50.0 | 50.0 | 50.0 |
| Evaluation | Charpy impact strength [kJ/m²] | | 4.2 | 3.9 | 3.5 | 11.2 | 14.1 | 12.0 | 10.0 | 14.2 | 11.4 | 9.0 | 3.6 | 2.9 | 4.5 | 17.0 | - | - | - |
| | Bending strength [MPa] | | 55 | 65 | 70 | 60 | 50 | 65 | 60 | 50 | 60 | 63 | 80 | 95 | 50 | 40 | - | - | - |
| | Bending elastic modulus [GPa] | | 4.0 | 4.5 | 5.4 | 4.5 | 3.7 | 3.5 | 4.5 | 3.5 | 4.0 | 4.0 | 5.5 | 6.5 | 3.7 | 2.9 | - | - | - |
| | DTUL' | | Good | Good | Good | Good | Good | Good | Good | Good | Good | Good | Good | Good | Bad | Bad | - | - | - |
| | Comprehensive evaluation | | B | C | C | A | A | A | A | A | A | A | C | C | E | E | F | F | F |

| | | | | | | | | | | | | | | | | | | | |
|---|---|---|---|---|---|---|---|---|---|---|---|---|---|---|---|---|---|---|---|
| * DTUL: deflection temperature under load | | | | | | | | | | | | | | | | | | | |

As is clear from the Table, each Example produced excellent results. In contrast, each Comparative Example did not provide satisfactory results.

## Claims

1. A molding material comprising:
cellulose fibers;
aliphatic polyester; and
esterified cellulose, wherein
the cellulose fibers are contained in an amount of 50% to 80% by mass.

2. The molding material according to claim 1, wherein
the aliphatic polyester is contained in an amount of 12% to 40% by mass.

3. The molding material according to claim 1, wherein
the esterified cellulose is contained in an amount of 4% to 25% by mass.

4. The molding material according to claim 1, wherein
the amount of the aliphatic polyester, XP mass%, and the amount of the esterified cellulose, XE mass%, satisfy 1.0 ≤ XP/XE ≤ 4.0.

5. The molding material according to claim 1, wherein
the aliphatic polyester has a chemical structure formed by condensation of an alkylenedicarboxylic acid with an alkylene group whose carbon chain length is 2 to 6 and an alkylenediol with an alkylene group whose carbon chain length is 2 to 8.

6. The molding material according to claim 1, wherein
the esterified cellulose is esterified by an acyl group containing an alkyl group with a carbon chain length of 1 to 18 and has a DS value of 1.0 to 2.5.
